# EUROPÄISCHE PATENTANMELDUNG

(11) **EP 0 831 241 A2**
(43) Veröffentlichungstag der Anmeldung: **25.03.1998**
(21) Anmeldenummer: 97116410.8
(22) Anmeldetag: 19.09.1997
(51) Int. Cl.: F16D 51/20

(54) **Trommelbremse mit einer Vorrichtung zum Austauschen der Bremsbacken**

(30) Priorität: 20.09.1996 IT MI960630 U
(71) Anmelder: A.D.R. S.p.A., 21040 Uboldo, (Prov. of Varese) (IT)
(72) Erfinder: Frigerio, Sergio, 21040 Uboldo, (Prov. von Varese) (IT); Pelc, Roman Michal, 38540 Zagorz (PL)
(74) Vertreter: Mayer, Hans Benno, Dipl.-Ing.

(57) **Zusammenfassung**

Trommelbremse mit einer Vorrichtung zum Austauschen der Bremsbacken, mit Federmitteln (1) zum Rueckholen der Bremsbacken (2), wobei den Federmitteln (1), die zwischen den Bremsbacken (2) vorgesehen sind, Einrichtungen zugeordnet sind, mit welchen die Federn (1) aus einer verlaengerten und gespannten Lage in eine verkuerzte und entspannte Lage bringbar sind, um in der entspannten Lage ein schnelles Loesen der Federmittel (1) von den Bremsbacken (2) zu ermoeglichen.

## Beschreibung

Die vorstehende Erfindung betrifft eine Trommelbremse mit einer Vorrichtung zum Austauschen der Bremsbacken.

Es ist bekannt, dass in Trommelbremsen, die z.B. in Anhaengerfahrzeugen, Landmaschinen oder Industriefahrzeugen verwendet werden, die Bremsbacken an einem Ende gelenkig gelagert sind und am verbleibenden Ende eine drehbare Rolle aufweisen, auf die eine Kurvenscheibe einwirkt, um die Bremsbacken auseinderzuspreizen.

Die Spreizbewegung, die ueber die Kurvenscheibe auf die Bremsbacken uebertragen wird, bringt die mit einem Bremsbelag versehenen Backen mit der Bremstrommel in Wirkverbindung, wodurch der Bremsvorgang eingeleitet wird. Die Bremsbacken werden in ihrer Ruhelage an die Kurvenscheibe unter Verwendung von einer oder mehrerer Federn angedrueckt. Die Federmittel sind als vorgespannte Rueckholfedern ausgebildet, um einen zufaelligen und unerwuenschten Kontakt zwischen den Bremsbacken und der Bremstrommel zu vermeiden.

Die vorgespannte Anordnung der Federmittel und die Art und Weise, mit der die Rueckholfeder fuer die Bremsbacken montiert sind sowie die Ausfuehrung des Schwenkgelenkes der Bremsbacken selbst, verhindern einen schnellen und einfachen Ausbau der Bremsbacken zur Durchfuehrung von Instandhaltungsarbeiten.

Um Instandhaltungsarbeiten an der Fahrzeugbremse vornehmen zu koennen, und zu diesem Zwecke die Bremsbacken von den Schwenklagern der Bremsvorrichtung abbauen zu koennen, ist es stets erforderlich, die genannten Rueckholfedern von den Bremsbacken zu loesen. Dazu ist die erhebliche Vorspannkraft der Federn zu ueberwinden, und im Anschluss daran sind die Lageraugen der Bremsbacken von den Schwenkbolzen abzuziehen.

Dies fuehrt dazu, dass Reparatur- oder Instandhaltungsarbeiten an einer bekannten Trommelbremse der beschriebenen Art, besonders aufgrund der erheblichen Zeitdauer, die fuer den Ausbau und den erneuten Einbau der Bremsbacken erforderlich ist, einen Zeitraum von 4-5 Stunden in Anspruch nehmen koennen.

Aufgabe der vorstehenden Erfindung ist es, die beschriebenen Nachteile des Standes der Technik zu vermeiden und die Moeglichkeit zu schaffen, die Vorspannkraft der Rueckholfedern, die auf die Bremsbacken einwirken, zu beseitigen und dadurch die Moeglichkeit zu schaffen, die Federn ohne vorherige Demontage weiterer Bauteile der Bremse auf einfache, rasche und sichere Weise auszubauen.

Eine weitere Aufgabe der Erfindung besteht ist darin, das Abziehen der Bremsbacken von den Lagerbolzen des Bremsgehaeuses auf einfache Weise zu ermoeglichen, ohne dazu weitere Bauteile der Trommelbremse entfernen zu muessen.

Die erfindungsgemaessen Aufgaben werden bei einer Trommelbremse mit einer Vorrichtung zum Ausbau der von Rueckholfeder belasteten Bremsbacken dadurch erreicht, dass den Federmitteln, die zwischen den Bremsbacken angeordnet sind, Einrichtungen zugeordnet sind, mit denen die Federmittel aus einer gestreckten und in Spannung befindlichen Lage in eine verkuerzte und entspannte Lage bringbar sind, in der ein schnelles Loesen der Federmittel von den Bremsbacken ermoeglicht wird.

Mit besonderem Vorteil ist die den Bremsbacken zugeordnete Rueckholfeder mit ihren zwei Enden an Haltebolzen angehaengt, die in Fuehrungen eingesetzt sind, die in die Versteifungsrippen der Bremsbacken eingearbeitet sind, wobei die Fuehrungen Einbuchtungen aufweisen, die sich in Richtung der Federachse erstrecken und zueinander unterschiedliche Tiefen aufweisen. Die Tiefen der Einbuchtungen sind groesser als der Bolzendurchmesser, um zwischen den Bremsbacken durch die Einbuchtungen mit groesserer Tiefe einen Abstand festzulegen, der ein vollstaendiges Entspannen der Feder ermoeglicht und breiter als der Durchmesser der Haltebolzen ist; die mit geringerer Tiefe vorgesehenen Einbuchtungen gegen einen gegenseitigen Abstand fest, der zu einem Vorspannen der Feder fuehrt.

In vorteilhafter Weise haben die Haltebolzen Abschnitte, die kleineren Durchmesser aufweisen und mit einer Laenge vorgesehen sind, die ein Austreten der Bolzen aus den Rippen der Bremsbacken ermoeglicht und die Moeglichkeit eroeffnet, eine zusaetzliche Vorrichtung aufzunehmen.

In vorteilhafter Weise ist die Einrichtung zum Einwirken auf den Betaetigungsbolzen der Rueckholfeder der Bremsbacken dadurch gekennzeichnet, dass sie aus einer Welle besteht die an einem Ende einen Griff aufweist, und mit einer quer angeordneten Platte ausgeruestet ist, die im Abstand von der Wellenachse eine Vertiefung aufweist, die dem Abstand zwischen zwei in den Fuehrungen der Verstaerkungsrippen der Bremsbacken vorgesehenen Vertiefungen entspricht.

In vorteilhafter Weise ist in der Trommelbremse eine Vorrichtung zum Austauschen der Bremsbacken vorgesehen, die sich dadurch kennzeichnet, dass fuer den Rueckholvorgang der Bremsbacken zwei Federmittel und eine Spannvorrichtung vorgesehen sind und die Spannvorrichtung Mittel zum gegenseitigen Annaehern oder Entfernen von zwei nebeneinanderliegenden Federenden aufweist.

Mit besonderem Vorteil zeichnet sich die Vorrichtung dadurch aus, dass die Spanneinrichtung fuer dei beiden Federenden aus zwei gleichfoermig ausgebildeten Platten besteht, die nebeneinander angeordnet sind und gegenseitig mit einem Abstand verbunden sind, der groesser als die Dicke der endseitigen Augen der Federmittel ausgewaehlt ist, wobei in die Platten zwei Fuehrungsnuten eingearbeitet sind, und diese Fuehrungsnuten mittig und symmetrisch gegenueber dem Schwerpunkt der Platte angeordnet sind und zwei Vertiefungen aufweisen und diese Vertiefungen zwei Bolzen aufnehmen, mit denen die Halteaugen der Federn mit zwei unterschiedlichen Abstaenden verbunden sind.

Ein weiterer Vorteil der Erfindung ist darin zu sehen, dass mittig zu den Platten eine Bohrung vorgesehen ist, in die ein an sich bekannter Betaetigungsschluessel einsetzbar ist.

In vorteilhafter Weise kennzeichnet sich die Vorrichtung zum Austauschen der Bremsbacken auch dadurch, dass die gelenkig ausgebildeten Enden der Bremsbacken mit den vom Bremsgehaeuse abstehenden Zapfen eine zweiseitig wirkende Verbindung bei Arbeitslage der Bremsbacken und eine einseitig wirkende Verbindung der Bremsbacken bei Verschwenken der Bremsbacken aus der Arbeitslage bilden.

Es hat sich auch als vorteilhaft erwiesen, dass die vom Bremsgehaeuse abstehenden Lagerzapfen und die Lageraugen der Bremsbacken eine Abflachung aufweisen.

In vorteilhafter Weise bildet die Abflachung der Lageraugen der Bremsbacken an den Lageraugen eine Oeffnung, deren Abmessung kleiner als der Durchmesser des Lagerzapfens und groesser als die Abmessung des Lagerzapfens senkrecht, zur Abflachung des Zapfens gemessen, aufweist.

In einer weiteren Ausfuehrungsform der erfindungsgemaessen Bremse ist vorgesehen, dass die Bremsbacken Zapfen aufweisen, die mit Lageraugen der Gelenke verbindbar sind, die am Gehaeuse der Bremse vorgesehen sind, wobei die Zapfen der Bremsbacken mit den Augen des Bremsgehaeuses eine zweiseitige Verbindung bei Arbeitslage der Bremsbacke bilden und eine einseitige Verbindung dann, wenn die Bremsbacken auf den Zapfen aus der Arbeitslage in eine Ruhelage verschwenkt werden.

Um die Verbindung zwischen den Zapfen der Bremsbacken und dem Gehaeuse der Bremse herzustellen, weisen die Bremsbacken sowie die Augen der Lagergelenke des Bremsgehaeuses seitliche Abflachungen auf.

Um ein Abziehen des Zapfens von dem Lagergelenk des Bremsgehaeuses zu ermoeglichen, bilden die Abflachungen an den Augen des Gelenkes eine Oeffnung.

Ein wesentlicher Vorteil, der mit der vorstehenden Erfindung erzielbar ist, ist darin zu sehen, dass die Vorspannkraft der Rueckholfeder, die auf die Bremsbacken einwirkt, ohne die Notwendigkeit einer Demontage weiterer Bauteile der Bremse, auf einfache und sichere Art aufgehoben werden kann.

Ein weiterer Vorteil der Erfindung besteht in der Moeglichkeit eines vereinfachten des Ausbaues der Bremsbacken ohne Demontage zusaetzlicher Bauteile der Bremse, wobei die Demontagearbeiten der Bremsbacken einfach durchfuehrbar sind und dabei Fehler bei der Demontage oder Montage der Bremsbacken vermieden werden.

Die erfingungsgemaesse Vorrichtung wird nun genauer beschrieben und anhand eines Ausfuehrungsbeispieles in den beigefuegten Zeichnungen dargestellt.

Es zeigen:
Figur 1 in Seitenansicht eine Bremsvorrichtung ohne die dazugehoerige Bremstrommel fuer eine erste Ausfuehrungsform der Vorrichtung;
Figur 2 in Seitenansicht die Bremse ohne Bremstrommel fuer eine zweite Ausfuehrungsform;
Figur 3 in Seitenansicht ein Detail der Verbindung zwischen Rueckholfeder und Bremsbacken, entsprechend einem ersten Ausfuehrungsbeispiel;
Figur 4 die gleiche Detaildarstellung in Vorderansicht, teilweise im Schnitt;
Figur 5 in perspektivischer Darstellung die Vorrichtung zum Einwirken auf die erste Vorrichtung;
Figur 6 und 7 schematisch den Einsatz der erfindungsgemaessen Vorrichtung;
Figur 8 und 9 im Detail die mittig angeordnete Verbindungsvorrichtung in einer zweiten Ausfuehrungsform;
Figur 10 einen Schluessel zum Einwirken auf die Verbindungsvorrichtung nach Figur 8 und 9;
Figur 11 und 12 zwei Arbeitslagen der Verbindungsvorrichtung zwischen den Rueckholfedern und den Bremsbacken nach Figur 8 und 9;
Figur 13 im Detail die Funktionsweise der den Bremsbacken zugeordnete Aushaengevorrichtung;
Figur 14 in einer Ansicht und teilweise im Schnitt, das Ende einer Bremsbacke zusammen mit einem Lagergelenk am Gehaeuse der Bremse;
Figur 15 in Seitenansicht, teilweise im Schnitt, eine Bremsbacke, die mit einem Lagergelenk am Gehaeuse der Bremse in Arbeitslage angeordnet ist;
Figur 16 in Seitenansicht, teilweise im Schnitt, eine Bremsbacke, die aus einer Arbeitslage in eine Ruhelage verschwenkt wurde.

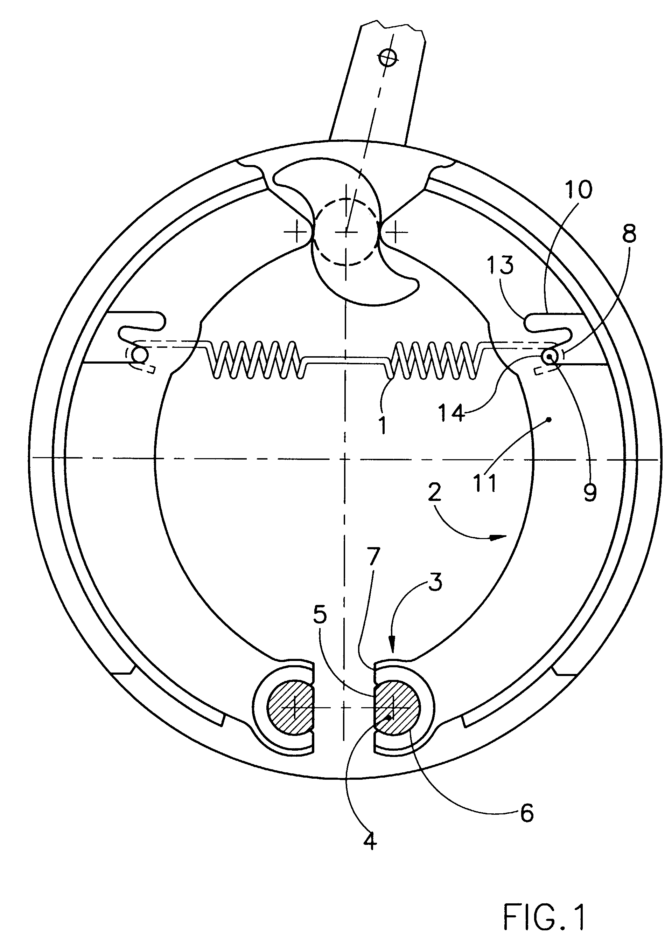

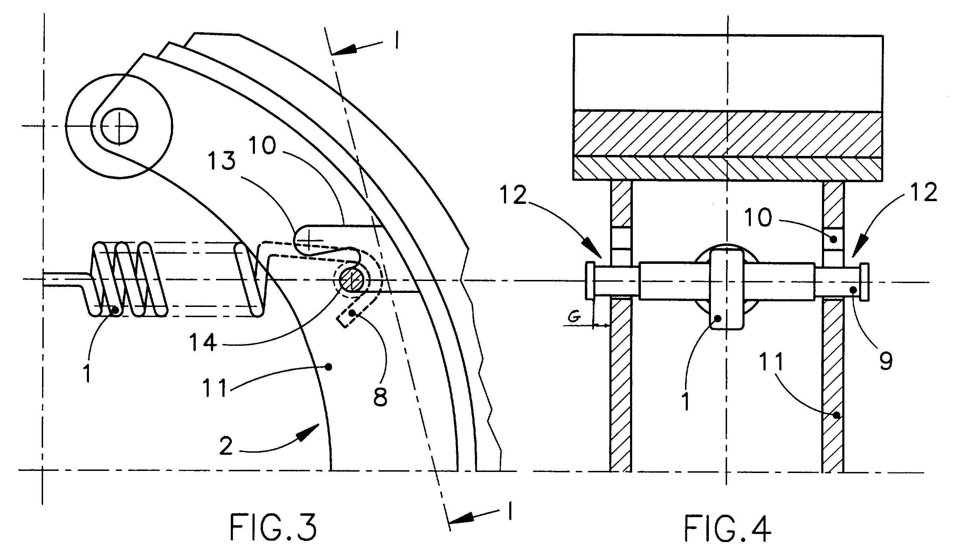

In den Figuren 1, 3 und 4 sind die Bauteile einer ersten Ausfuehrungsform der erfindungsgemaessen Vorrichtung und die Anordnung der Bauteile im Inneren der Bremsvorrichtung dargestellt.

Die Rueckholfeder 1, die mit den Bremsbacken 2 verbunden ist, ist ueber Einhaengeaugen 8, die an den Enden der Federn vorgesehen sind, mit Bolzen 9 wirkverbunden. Die Bolzen 9 sind quer zur Erstreckung der Feder 1 vorgesehen.

Die Bolzen 9 stehen ueber Nuten 12 mit Fuehrungen 10 in Verbindung, die in Verstaerkungsrippen 11 der Bremsbacken 2 eingearbeitet sind.

Die Fuehrungen 10 erstrecken sich in Richtung der Erstreckung der Feder 1 und weisen Einbuchtungen 13, 14, z.B. zwei Einbuchtungen mit unterschiedlicher Tiefe auf. Die Tiefe der Einbuchtungen 13, 14 ist stets groesser gewaehlt als der Durchmesser des einzuhaengenden Zapfens 9. Die groessere Tiefe aufweisenden Einbuchtungen 13 legen bei einer Lageanordnung der unbetaetigten Bremsbacken 2, zwischen den Bremsbacken einen Abstand fest, der kleiner oder gleich der freien Laenge der Feder 1 ist.

Im Gegensatz zu den anderen Einbuchtungen, bei welchen die Breite um einen kleinen Betrag groesser ist als der Durchmesser des Zapfens 9, ist die Breite der tieferen Einbuchtung 13 groesser als der maximale Durchmesser des Zapfens 9.

Die Einbuchtungen 14 sind mit einer solchen Tiefe vorgesehen, die ausreichend ist, um einen Abstand zu den entsprechenden Bauteilen an der gegenueberliegenden Bremsbacke zu verwirklichen, der so ausgewaehlt ist, dass ein Strecken der Feder 1 zur Erzielung einer Vorspannkraft eintritt.

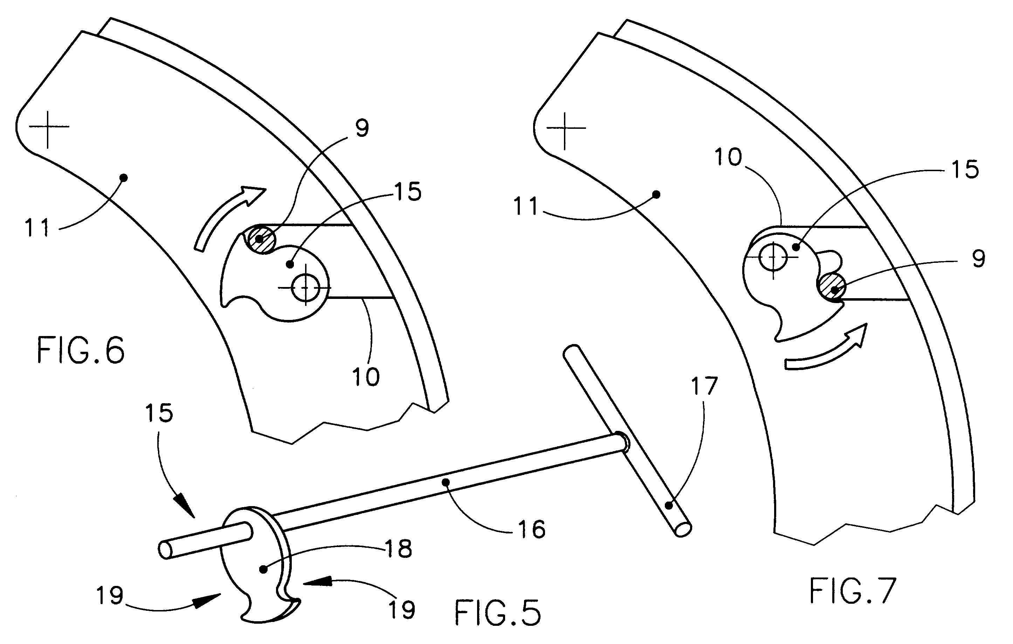

In Figur 5 ist die Einrichtung dargestellt, die nach der Erfindung notwendig ist, um auf den Zapfen 9 einzuwirken, und diesen Zapfen 9 im Inneren der Fuehrung 10 von einer Einbuchtung 14 in die danebenliegende Einbuchtung 13 oder umgekehrt zu versetzen.

Das gesamthaft mit 15 gekennzeichnete Werkzeug besteht aus einer Welle 16, die einen Durchmesser aufweist, der ein Einfuehren in jede der Einbuchtungen 13 und 14 ermoeglicht. Das Werkzeug 15 weist eine Laenge auf, die groesser ist als die Breite der Bremsbacken.

An einem Ende weist das Werkzeug 15 einen querliegenden Griff 17 auf. Mit einem Abstand, der ausreichend ist, die Welle 16 in eine der Einbuchtungen 13, 14 der Fuehrung 10 einzusetzen, ist eine Platte 18 angeordnet.

Am Umfang der Platte 18 sind zwei Einbuchtungen 19 vorgesehen. Diese Einbuchtungen 19 sind derartig angeordnet, dass der Platte 18 symmetrische Gestalt gegenueber einer quer zur Welle 16 angeordneten Achse verliehen wird. Die Platte 18 weist des weiteren Form eines Doppelhakens auf.

Die Einbuchtungen 19 der Platte 18 sind mit einem solchen Abstand von der Achse der Welle 16 angeordnet, der mit dem Abstand zwischen den beiden Einbuchtungen 13 und 14 der Fuehrung 10 entspricht. In die Einbuchtungen 13, 14 wird der verschiebbare Zapfen 9 der Feder 1 eingesetzt.

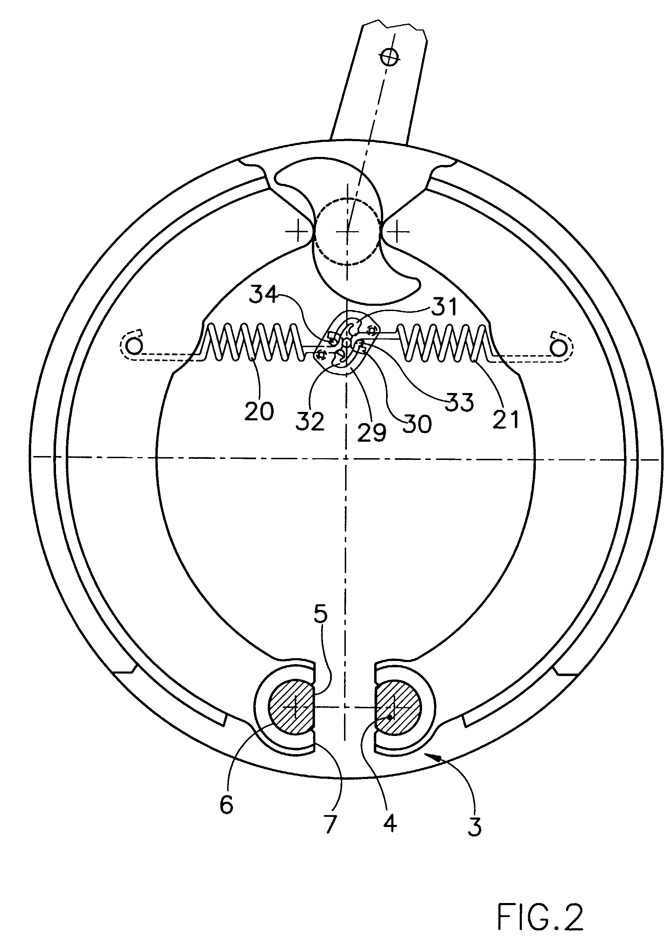

Den Figuren 2, 8 und 9 kann entnommen werden, welche Bauteile mit welcher Anordnung in einer Trommelbremse nach einem zweiten Vorschlag der Erfindung vorzusehen sind.

Bei diesem Ausfuehrungsbeispiel besteht die Einrichtung zum Rueckholen der Bremsbacken 2 aus drei Bauteilen, naemlich zwei Federn 20, 21 und einer Verbindungseinrichtung, die zwischen diesen Federn angeordnet ist.

Diese Verbindungseinrichtung weist Mittel auf, die ein Entfernen oder Annaehern der nebeneinanderliegenden Enden der Federn 20, 21 ermoeglicht.

Die Federn 20, 21, sind mit den Bremsbacken in der fuer Trommelbremsen ueblichen Weise verbunden.

Die Verbindungseinrichtung, die zwischen den Federn 20, 21 angeordnet ist, besteht in vorteilhafter Weise aus zwei Platten 28, 29, die gleiche Form haben und uebereinanderliegend angeordnet sind und miteinander, z.B. unter Verwendung von Bolzen oder Nietstiften, verbunden sind.

Der Abstand zwischen den uebereinanderliegenden Platten ist so gewaehlt, dass die Augen 30 an den Enden der Federn 20, 21 frei einfuehrbar sind.

In den Platten 28, 29 sind zwei Bahnen 31, 32 ausgebildet, die mittig und symmetrisch gegenueber dem Schwerkpunkt 35 der Platten 28, 29 angeordnet sind. In den Bahnen 31, 32 werden zwei Zapfen 33, 34 gelagert. Jeweils ein Zapfen 33, bzw. 34 ist in einer entsprechenden Fuehrungsbahn 31 bzw. 32 verschiebbar.

Mit den Zapfen 33, 34 stehen die endseitig an den Federn 20, 21 vorgesehenen Augen 30 in Verbindung.

Die Fuehrungsbahnen 31, 32 definieren zwei Vertiefungen 36, 37 in Richtung des Schwerkpunktes 35 der Platten.

Diese Vertiefungen 36, 37 sind gegenueber der Vertiefung der symmetrisch angeordneten Fuehrungsbahn unter Vorsehung von unterschiedlichen Abstaenden (A, B) angeordnet.

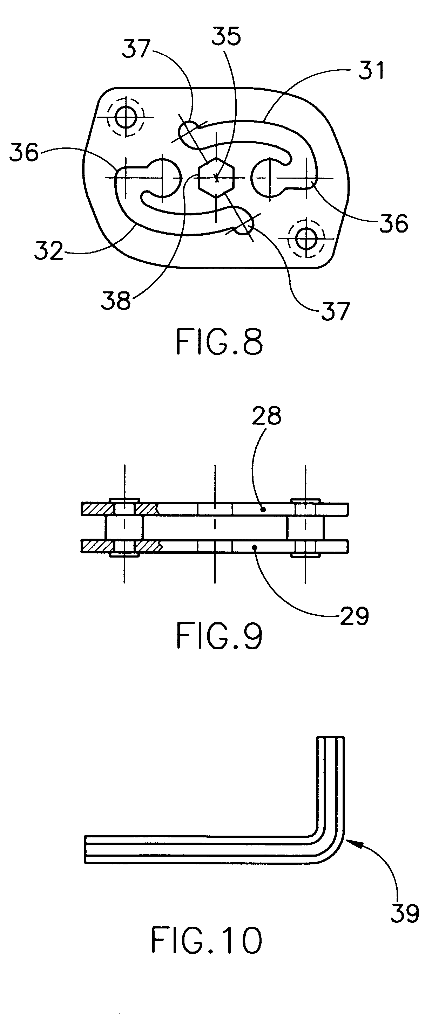

Der erste Abstand (A) legt die Lage fuer eine erste Vorspannung der Federn 20, 21 fest, waehrend der Abstand (B) fuer beide Federn 20, 21 eine entspannte Lage festlegt. Mittig zu den beiden Platten 28, 29 ist eine Oeffnung 38, z.B. in Form einer viereckigen Ausnehmung, vorgesehen und mit dieser viereckigen Ausnehmung kann ein bekanntes Werkzeug in Form eines Schluessels 39, wie in Figur 10 dargestellt, eingesetzt werden.

Die Vorrichtung nach der Erfindung ist aus Gruenden der besseren Uebersicht in Figur 2 in einer Seitenansicht dargestellt. Wie der Fachmann erkennen kann, ist die Vorrichtung tatsaechlich um 90° gedreht gegenueber den Rueckholfedern 20, 21 der Bremsbacken 2 angeordnet, um dadurch den Platzbedarf einzuschraenken.

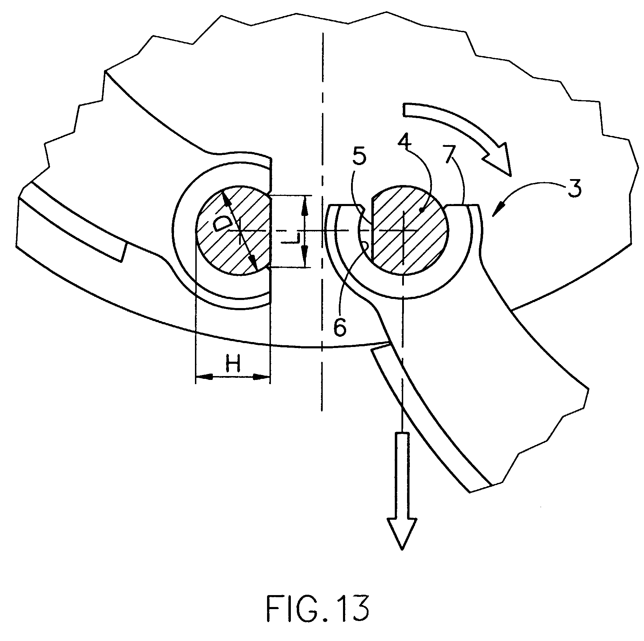

Unter Zuhilfenahme der Figur 13 wird erkennbar, wie das untere Ende 3 der Bremsbacken 2 gelenkartig verschwenkbar auf Lagerzapfen 4 am Bremsengehaeuse angeordnet wird.

Die Lagerzapfen 4 weisen seitliche Abflachungen 5 auf, die den Durchmesser oder die Dicke "H" des Lagerzapfens 4 vermindern.

Die dazugehoerigen Lageraugen 3, die an den Bremsbacken 2 vorgesehen sind, weisen ebenfalls Abflachungen 7 auf, die eine Oeffnung der Lageraugen 3 festlegen, die kleiner ist als der Durchmesser "D" der Lagerzapfen aber groesser gestaltet ist als der Druchmesser oder die Dicke "H" der Lagerzapfen 4.

Den Figuren 1, 6 und 7 kann die Funktionsweise der ersten Ausfuehrungsform der Vorrichtung entnommen werden.

Da die Rueckholfeder 1 zwischen den Bremsbacken 2 mit diesen unter Verwendung eines quer angeordneten Zapfens 9, montiert ist und der Zapfen 9 in einer Fuehrung 10 versetzbar angeordnet ist, ist es bei Demontage der Trommelbremse z.B. zur Durchfuehrung von Reparatur- oder Instandhaltungsarbeiten ausreichend, das Werzkeug 15 in die tiefere Einbuchtung 13 der Fuehrung 10 einzusetzen um zu erreichen, dass die Platte 18 ueber die Einbuchtung 19 den Zapfen 9 ergreift, der aus der Verstaerkungsrippe 11 der entsprechenden Bremsbacke 2 mit einer Laenge "G" austritt. Durch Drehung des Werkzeuge 15 erfolgt ein Versetzen des Zapfens 9, an dem die Feder 1 angehaengt ist, und zwar von der weniger tiefen Einbuchtung 14 in die tiefer ausgebildete Einbuchtung 13.

Zur Erhoehung der Betriebssicherheit der Trommelbremse wird ein ungewolltes Uebertreten oder Versetzen des Zapfens 9 von einer Einbuchtung in die danebenliegende Einbuchtung, z.B. bei Auftreten von Stoessen oder Schwingungen am Fahrzeug, dadurch vermieden, dass die Einbuchungen 13, 14 in den Fuehrungen 10 eine Tiefe aufweisen, die groesser ist als der Druchmesser des Zapfens 9. Dadurch wird eine stabile und durch einen bestimmten Totpunkt bestimmte Ausnehmungen festgelegt.

Wird in der aehnlichen Weise auch fuer die zweite Bremsbacke verfahren, so verkuerzt sich die Laenge der Feder 12, wodurch die Vorspannung vollstaendig aufgehoben wird.

Da die Breite der Einbuchtung 13 groesser als der Durchmesser des Zapfens 14 ist, wird auf besonders einfache Weise ein Entnehmen des Zapfens vom Auge 8 der Feder und der Verstaerkungsrippen 11 ermoeglicht, wodurch ein einfacher Ausbau der Feder 1 moeglich wird.

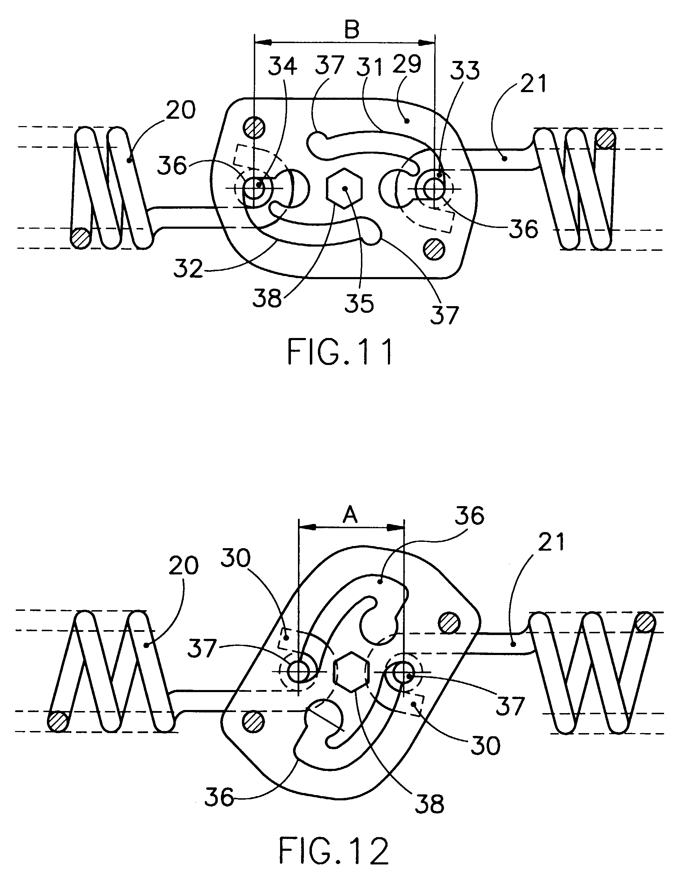

Den Figuren 2, 11 und 12 kann die Funktionsweise der zweiten Ausfuehrungsform der Vorrichtung entnommen werden.

Bei dieser zweiten Ausfuehrungsform sind die Rueckholfedern 20, 21 der Bremsbacken 2 in bekannter Weise an den Bremsbacken 2 befestigt. Diese bekannte Befestigungsart an den Bremsbacken 2 ermoeglicht es, die erfindungsgemaesse Vorrichtung auch bei bereits montierten Fahrzeugbremsen einzusetzen. Bei diesen Trommelbremsen ist lediglich die Verbindungsvorrichtung der Bremsbacken 2 auszutauschen.

Die Verbindungsvorrichtung der Bremsbacken 2 besteht in diesem Fall aus drei Bauteilen, naemlich zwei Federn 20, 21 und einem Verbindungsteil 28, 29.

Die Fuehrungsbahnen, die in die zwei parallel angeordneten Platten 28, 29 des mittigen Bauteiles eingearbeitet sind, mit welchen die Federn vorgespannt oder entspannt werden koennen, erlaubt eine Fuehrung der Zapfen 33, 34, an denen die Augen 30 der Federn 20, 21 angehaengt sind. Die Zapfen 33, 34 koennen aus einer Lage, in der die Federn 20, 21 gespannt sind, in eine Lage versetzt werden, in der die Federn entspannt sind oder umgekehrt.

Bei genauerer Betrachtung der Funktionsweise der Vorrichtung ist erkennbar, dass die von den versetzbaren Zapfen 33, 34 einnehmbaren Lagen in den Fuehrungsbahnen 31, 32, unter Durchfuehrung einer Drehbewegung mittels Einsatz eines bekannten Schluessels 39 (Figur 10) und verschwenkbaren Platten 28, 29, stets gleichen Abstand vom Schwerpunkt 35 der Platte einnehmen.

Um zu vermeiden, dass sich die Federn versehentlich entspannen, ist zwischen den zwei einnehmbaren Lagen der Zapfen 33, 34 eine mit 37 gekennzeichnete Totpunktlage festgelegt, die einen Abstand "A" zwischen den Zapfen 33, 34 nebeneinanderliegender Federn festgelegt, in der Art, dass die Federn vorgespannt werden.

Die Totpunktlage versetzt die beiden Verbindungsniete der Platten 28, 29 in Richtung der Augen 30, die an den Enden der Federn 20, 21 vorgesehen sind, wodurch die Lage der Augen 30 besser stabilisiert wird und einer Betriebslage der Rueckholvorrichtung fuer die Bremsbacken entspricht.

Die zweite Totpunktlage 36 legt einen Abstand zwischen den Zapfen 33, 34 fest, die mit den Enden der Rueckholfedern 20, 21 der Bremsbacken verbunden sind. Damit werden die Federn 20, 21 vollstaendig entlastet. In der Naehe der Totpunktlage ist ein Langloch vorgesehen, dessen Abmessungen groesser sind als die Abmessungen der Zapfen 33, 34. Befinden sich die Zapfen 33, 34 im Langloch, so besteht die Moeglichkeit, die Zapfen 33, 34 zu entnehmen und die Federn 20, 21 auszuhaengen.

Es wird ersichtlich, mit welcher Einfachheit die Spannung in den Federn 20, 21 aufgehoben werden kann, um die Bremsbacken 2 durch Verdrehen der Verbindungsvorrichtung mittels eines Schluessels zu entlasten.

Sind die Federn 20, 21 einmal von den Bremsbacken 2 geloest, so wird es moeglich, die Bremsbacken 2 um das Lagerauge 3 am Gehaeuse der Bremse zu verschwenken.

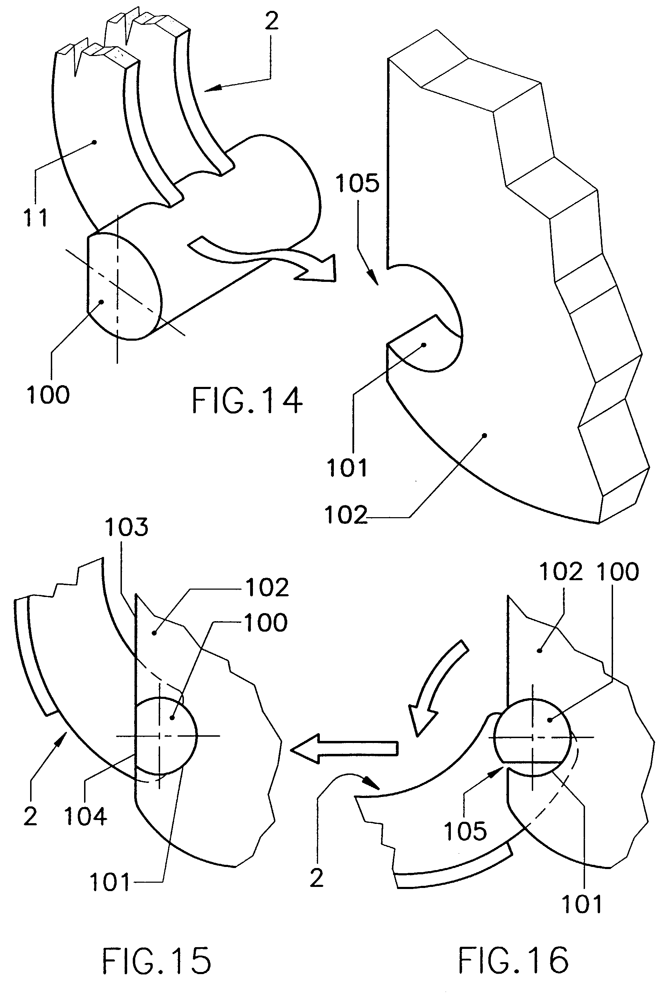

Unter Zuhilfenahme von Figur 14 wird erkennbar, wie die Bremsbacke 2 vom Lagerzapfen 4 des Gehaeuses abziehbar ist.

Da am Lagerauge 3 der Gelenkverbindung der Bremsbacke eine Abflachung 7 vorgesehen ist, die mit einer Abflachung 5 am Lagerzapfen 4 ausgerichtet ist, besteht die Moeglichkeit bei einer Drehung der Bremsbacke um 90° die Kontaktflaeche 6 zwischen dem Gelenk und dem Zapfen 4 zu vermindern bis sich eine einseitige Verbindung einstellt.

Es ist somit moeglich, nach Durchfuehrung einer Schwenkbewegung nach unten, den Bremsbacken vom Lagerzapfen 4 des Bremsgehaeuses abzuziehen.

Der Figur 14 kann eine weitere Ausfuehrungsform der Erfindung entnommen werden.

Am unteren Ende der Bremsbacke 2 ist ein Zapfen 100 vorgesehen, der quer zur Rippe 11 angeordnet ist.

Am Gehaeuse 102 der Bremse ist ein Lagergelenk vorgesehen.

Das Lagergelenk weist ein Auge 101 auf, das formschluessig mit dem Zapfen 100 der Bremsbacke 2 verbindbar ist.

Der Figur 15 kann entnommen werden, dass seitlich gegenueber dem Lagergelenk, das am Bremsgehaeuse angeordnet ist, eine Abflachung 103 vorgesehen ist.

Die Abflachung 103 ist zurr Abflachung 104, die seitlich am Zapfen 100 der Bremsbacke 2 angeordnet ist, ausgerichtet.

Die Abflachung 103 am Gehaeuse 102 der Bremse stellt eine Oeffnung 105 des Lagerauges 101 dar.

Ueber die Oeffnung des Lagerauges ist es moeglich, den Zapfen 100 der Bremsbacke 2 abzuziehen, und zwar dann, wenn die Bremsbacke 2 aus ihrer Arbeitslage in eine Ruhelage verschwenkt wurde (Figur 16).

Die Abflachung 103 der Gelenkverbindung deckt das Auge 101 nur teilweise ab.

Somit wird durch die Verbindung zwischen Lagergelenk und Zapfen 100 eine zweiseitige Verbindung geschaffen, sobald die Bremsbacke 2 in Arbeitsstellung angeordnet ist (Figur 15).

Ferner erhaelt man eine einseitige Verbindung, wenn die Bremsbacke von der Arbeitstellung in die Ruhelage verschwenkt wird. (Figur 16)

## Patentansprüche

1. Trommelbremse mit einer Vorrichtung zum Austauschen der Bremsbacken unter Vorsehung einer mit den Bremsbacken (2) zusammenwirkenden Rueckholfeder, **dadurch gekennzeichnet,** dass den Federmitteln (1), die zwischen den Bremsbacken (2) angeordnet sind, Einrichtungen zugeordnet sind, mit denen die Federmittel (1) aus einer gestreckten und in Spannung befindlichen Lage in eine verkuerzte und entlastete Lage bringbar sind, in der ein schnelles Loesen der Federmittel (1) von den Bremsbacken (2) ermoeglicht wird.

2. Trommelbremse, mit einer Vorrichtung zum Austauschen der Bremsbacken nach Patentanspruch 1, **dadurch gekennzeichnet,** dass die mit den Bremsbacken (2) verbundene Rueckholfeder (1) an zwei Ende (8) mit Zapfen (9) verbunden ist, dass die Zapfen (9) von Fuehrungsbahnen (10) aufgenommen sind, die in Verstaerkungsrippen (11) der Bremsbacken (2) eingearbeitet sind, dass die Fuehrungsbahnen (10) Einbuchtungen (13, 14) aufweisen, die sich in Richtung der Feder (1) erstrecken, dass die Einbuchtungen (13, 14) eine Tiefe aufweisen, die groesser ist als der Durchmesser des Zapfens (9) und die Tiefen der Einbuchtungen unterschiedlich zueinander ausgefuehrt sind, dass zwischen den Bremsbacken (2) durch die Einbuchtungen (13) mit groesserer Tiefe ein Abstand festgelegt wird, der ein vollstaendiges Entlasten der Feder (1) ermoeglicht und breiter als der Zapfendurchmesser ausgebildet ist und die Einbuchtungen (14) einen Abstand zwischen den Bremsbacken festlegen, der zu einem Vorspannen der Feder (1) fuehrt.

3. Trommelbremse, mit einer Vorrichtung zum Austauschen der Bremsbacken nach Patentanspruch 2, **dadurch gekennzeichnet,** dass die Zapfen (9) einen Abschnitt (12) mit kleinerem Durchmesser aufweisen und eine Laenge aufweisen, um aus den Rippen (11) der Bremsbacken (2) mit einer Laenge "G", zur Aufnahme einer Vorrichtung auszutreten.

4. Trommelbremse, mit einer Vorrichtung zum Austauschen der Bremsbacken, nach Patentanspruch 2, **dadurch gekennzeichnet,** dass die Vorrichtung (15) aus einer Welle (16) besteht und an einem Ende der Welle (16) ein Griffteil (17) angebracht ist, dass die Welle (16) eine querliegende Platte (18) ausweist und in eine Fuehrung (10) einsetzbar ist, dass die Platte eine Einbuchtung (19) aufweist, die mit einem derartigen Abstand von der Achse der Welle (16) vorgesehen ist, der dem Abstand zwischen den Einbuchtungen (13, 14) entspricht, die in den Verstaerkungsrippen (11) der Bremsbacken (2) vorgesehen sind.

5. Trommelbremse, mit einer Vorrichtung zum Austauschen der Bremsbacken nach Patentanspruch 1, **dadurch gekennzeichnet,** dass die Verbindungsvorrichtung der Bremsbacken (2), unter Verwendung von zwei Federn (20, 21) und einer Spannvorrichtung gebildet ist und die Spannvorrichtung Mittel zum Annaehern und zum Entfernen der beiden Federenden dient.

6. Trommelbremse, mit einer Vorrichtung zum Austauschen der Bremsbacken, nach Patentanspruch 5, **dadurch gekennzeichnet**, dass die Verbindungsvorrichtung zwischen den Federn (20, 21) aus zwei gleichfoermig ausgebildeten Platten (28, 29) besteht, dass die Platten (28, 29) uebereinander angeordnet sind und zueinander mit einem Abstand vorgesehen sind, der groesser als die Dicke der Augen (30) der Federn (20, 21) ist, dass in die Platten zwei Bahnen (31, 32) eingearbeitet sind, die mittig und symmetrisch gegenueber dem Schwerpunkt (35) der Platten (28, 29) angeordnet sind, und die Bahnen (31, 32) jeweils zwei Einbuchtungen (36, 37) aufweisen, und die beiden Einbuchtungen (36, 37) Zapfen (33, 34) aufnehmen, mit denen die Augen (30) der Federn (20, 21) in Verbindung stehen und mit unterschiedlichen Abstaenden (A, B) festlegbar sind.

7. Trommelbremse, mit einer Vorrichtung zum Austauschen der Bremsbacken, nach Patentanspruch 6, **dadurch gekennzeichnet,** dass mittig zu den Platten eine Oeffnung (38) vorgesehen ist, mit der ein Schluessel (39) wirkverbindbar ist.

8. Trommelbremse, mit einer Vorrichtung zum Austauschen der Bremsbacken, nach Patentanspruch 1, **dadurch gekennzeichnet,** dass die Gelenke (3) der Bremsbacken (2) mit den Zapfen (4) des Bremsgehaeuses eine doppelseitige Verbindung in Betriebslage der Bremsbacken und eine einseitig wirkende Verbindung bei Verschwenken der Bremsbacken (2) um die Zapfen in die Ruhelage der Bremsbacken (2) bilden.

9. Trommelbremse, mit einer Vorrichtung zum Austauschen der Bremsbacken, nach Patentanspruch 8, **dadurch gekennzeichnet,** dass die Zapfen (4) zur Aufnahme der Bremsbacken (2) und die Augen (3) der Bremsbacken seitliche Abflachungen (5) aufweisen.

10. Trommelbremse, mit einer Vorrichtung zum Austauschen der Bremsbacken, nach Patentanspruch 8, **dadurch gekennzeichnet**, dass die Abflachung (7) der Augen (3) der Bremsbacken eine Oeffnung (L) an den Augen (13) festlegt, die kleiner als der Durchmesser (D) des Zapfens (4) ist und groesser als die Dicke (H) der Zapfen (4) bei Messung der Dicke (H) senkrecht zur Abflachung (5) des Zapfens (4).

11. Trommelbremse, mit einer Vorrichtung zum Austauschen der Bremsbacken, nach Patentanspruch 9, **dadurch gekennzeichnet**, dass die Bremsbacken (2) Lagerzapfen (100) aufweisen, die mit Augen (101) eines Lagergelenkes verbindbar sind, dass das Lagergelenk am Gehaeuse (102) der Bremse angeordnet ist und die Zapfen (100) der Bremsbacken (2) mit den Augen (101) am Gehaeuse (102) der Bremse eine zweiseitige Verbindung in der Arbeitsstellung der Bremsbacken und eine einseitige Verbindung beim Verschwenken der Bremsbacken auf den Zapfen (100) von der Arbeitslage in eine Ruhelage bilden.

12. Trommelbremse, mit einer Vorrichtung zum Austauschen der Bremsbacken, nach Patentanspruch 11, **dadurch gekennzeichnet**, dass die Zapfen (100) der Bremsbacken (2) und die Augen (101) am Gehaeuse (102) der Bremse seitlich eine Abflachung (103, 104) aufweisen.

13. Trommelbremse, mit einer Vorrichtung zum Austauschen der Bremsbacken, nach Patentanspruch 12, **dadurch gekennzeichnet**, dass die Abflachung (103) der Augen (101) eine Oeffnung (105) festlegen, die seitlich zu dem Gelenk angeordnet ist und dass ueber die Oeffnung (105) der Augen (101) eine Entnahme der Zapfen (100) der Bremsbacken (2) dann moeglich ist, wenn die Bremsbacken (2) von ihrer Arbeitsstellung in eine Ruhestellung verschwenkt sind.
